# EUROPÄISCHE PATENTSCHRIFT

(11) **EP 3 600 588 B1**
(45) Veröffentlichungstag und Bekanntmachung des Hinweises auf die Patenterteilung: **30.12.2020**
(21) Anmeldenummer: 18712166.0
(22) Anmeldetag: 15.03.2018
(51) Int. Cl.: B01D 3/16

(54) **BODEN FÜR EINE STOFFAUSTAUSCHKOLONNE**
TRAY FOR MATERIAL TRANSFER COLUMN
FOND POUR UNE COLONNE D'ÉCHANGE DE MATIÈRE

(30) Priorität: 22.03.2017 DE 102017106175
(43) Veröffentlichungstag der Anmeldung: 05.02.2020
(73) Patentinhaber: thyssenkrupp Industrial Solutions AG, 45143 Essen (DE); thyssenkrupp AG, 45143 Essen (DE)
(72) Erfinder: MINNE, Pascal, 44141 Dortmund (DE); HONECKER, Horst, 44534 Lünen (DE)
(74) Vertreter: thyssenkrupp Intellectual Property GmbH
(86) Internationale Anmeldenummer: PCT/EP2018/056571
(87) Internationale Veröffentlichungsnummer: WO 2018/172187

(56) Entgegenhaltungen:
- WO-A1-2013/072353
- DE-B- 1 249 846
- DE-C1- 10 000 288
- GB-A- 110 910
- GB-A- 575 335

## Beschreibung

### TECHNISCHES GEBIET

Die vorliegende Schrift betrifft Ausführungsformen eines Bodens für eine Stoffaustauschkolonne, wie eine Absorptionskolonne, eine Rektifikationskolonne, eine Strippkolonne oder eine Destillationskolonne. Außerdem betrifft die Schrift Ausführungsformen einer Stoffaustauschkolonne, die eine Vielzahl derartiger Böden umfasst.

### HINTERGRUND

Stoffaustauschkolonnen, wie eine Absorptionskolonne, eine Rektifikationskolonne, eine Strippkolonne oder eine Destillationskolonne, sind bereits seit Jahrzehnten im chemischen Anlagenbau vorzufinden.

Beispielsweise erfolgt in einer Stoffaustauschkolonne eine Stofftrennung durch intensiven Kontakt einer Flüssigphase mit einer Gasphase. Dabei kann die Flüssigphase von oben nach unten durch die Stoffaustauschkolonne laufen, und die Gasphase kann in entgegengesetzter Richtung von unten nach oben durch die Stoffaustauschkolonne geführt werden.

Um den Kontakt zwischen der Flüssigphase und der Gasphase sicherzustellen, kann in der Stoffaustauschkolonne eine Vielzahl übereinander angeordnete Böden vorgesehen sein, wobei die Böden jeweils so ausgebildet sein können, dass die Flüssigkeit über den Boden läuft.

Weiter können in einem jeweiligen Boden Stoffaustauschelemente vorgesehen sein, wie Gasdurchtrittsöffnungen, durch die das aufstrebende Gas durch die Flüssigkeit aufsteigt.

Die übereinander angeordneten Böden können mittels Zulaufschächten bzw. Ablaufschächten miteinander verbunden sein. Derartige Schächte können die Flüssigphase auf den nächsten Boden leiten und z.B. als Führung entgaster Flüssigkeit von einem Boden zum darunterliegenden Boden dienen. Solche Schächte sind auch unter dem Begriff Downcomer bekannt.

Die Druckschrift WO 2013/072353 A1 offenbart in diesem Zusammenhang einen Boden für eine Stoffaustauschkolonne mit Gasdurchtrittsöffnungen, die über dem Boden verteilt angeordnet sind, sowie mindestens einem Leitblech zur Strömungsumlenkung von auf dem Boden strömender Flüssigkeit, wobei der Boden über mindestens einen Zulauf mit einer Flüssigkeit beschickt werden kann, wobei der Boden mindestens einen Zulauf, mindestens ein Trennwehr, das die einströmende Flüssigkeit in zwei Ströme trennt, und mindestens zwei Abläufe aufweist oder mindestens zwei Zuläufe und mindestens einen Ablauf für die Flüssigkeit aufweist, wobei jeder Strom entlang eines Strömungsweges zu einem Ablauf strömt.
Als weiterer Stand der Technik können die DE 15 20 056 A und die CH 463 465 A und die DE1249846B genannt werden.

Aufgabe der vorliegenden Erfindung ist es, einen Boden für eine Stoffaustauschkolonne bereitzustellen, der gegenüber dem vorbekannten Boden verbesserte Eigenschaften hinsichtlich seiner Fertigung und/oder hinsichtlich des thermodynamischen Verhaltens beim Stoffaustausch bietet.

### BESCHREIBUNG

Zur Lösung der vorstehenden Aufgabe wird ein Boden für eine Stoffaustauschkolonne gemäß dem unabhängigen Anspruch 1 vorgeschlagen. Der Boden ist jeweils ausgebildet, um einen Kontakt zwischen einer Flüssigphase und einer Gasphase zu ermöglichen.

Gemäß einer Ausführungsform umfasst der Boden für die Stoffaustauschkolonne: einen Bodenzulauf, über den der Boden mit der Flüssigphase beschickt wird; einen Bodenablauf, über den die Flüssigphase von dem Boden abläuft; erste Führungsmittel zum Führen der Flüssigphase, wobei die ersten Führungsmittel einen ersten Verlaufspfad ausbilden, entlang dem die Flüssigphase vom Bodenzulauf zum Bodenablauf strömt; einen Einlass für ein Temperierfluid; einen Auslass für das Temperierfluid; und zweite Führungsmittel zum Führen des Temperierfluids für einen Wärmeaustausch mit der Flüssigphase, wobei die zweiten Führungsmittel einen mit dem ersten Verlaufspfad überlappenden zweiten Verlaufspfad ausbilden, der vom Einlass zum Auslass führt, und wobei das Temperierfluid entlang des zweiten Verlaufspfads in einer zur Strömungsrichtung der Flüssigphase entgegengesetzten Richtung strömt.

Der zweite Verlaufspfad erstreckt sich vollständig oder nahezu vollständig entlang des ersten Verlaufspfads, sodass dort, wo der Wärmeaustausch zwischen der Flüssigphase und dem Temperierfluid stattfindet, das Temperierfluid entgegengesetzt zur Strömungsrichtung der Flüssigphase strömt. Hierfür kann es zweckmäßig sein, dass der Einlass für das Temperierfluid in der Nähe des Bodenablaufs installiert ist, und dass der Auslass für das Temperierfluid in der Nähe des Bodenzulaufs installiert ist. Beispielsweise "sieht" also die strömende Flüssigphase während ihres gesamten Weges vom Bodenzulauf hin zum Bodenablauf ein ihr entgegen strömendes Temperierfluid. Auf diese Weise kann ein verbesserter Energieaustausch zwischen der Flüssigphase und den Temperierfluid stattfinden.

In der Ausführungsform verwirklicht der Boden für die Stoffaustauschkolonne ein über dem gesamten oder nahezu gesamten Boden erfolgendes Gegenstromprinzip, bei dem die "bodenseitige" Flüssigphase und das durch die zweiten Führungsmittel geführte Temperierfluid, beispielsweise also ein "rohrseitiges" Temperierfluid, im entgegengesetzten Richtungen ("Gegenstrom") strömen.

Der Wärmeaustausch kann entweder durch Aufnahme von Wärme der Flüssigphase durch das Temperierfluid oder durch Abgabe von Wärme durch das Temperierfluid erfolgen. Im ersten Fall findet also eine Kühlung der Flüssigphase statt, und im zweiten Fall eine Erwärmung der Flüssigphase. Welcher Fall zur Anwendung kommt, hängt von den jeweiligen prozesstechnischen Erfordernissen ab.

Gemäß der Ausführungsform umfasst der Boden für die Stoffaustauschkolonne: einen Bodenzulauf, über den der Boden mit der Flüssigphase beschickt wird; einen Bodenablauf, über den die Flüssigphase von dem Boden abläuft; erste Führungsmittel zum Führen der Flüssigphase, wobei die ersten Führungsmittel einen ersten Verlaufspfad ausbilden, entlang dem die Flüssigphase vom Bodenzulauf zum Bodenablauf strömt, und wobei: der Bodenzulauf einen ersten Eingang umfasst, der an einem Rand des Bodens angeordnet ist; der Bodenablauf einen ersten Ausgang umfasst, der in einem Zentrum des Bodens angeordnet ist; und die ersten Führungsmittel eine spiralförmige Leitwehranordnung umfassen, die den ersten Verlaufspfad zwischen dem ersten Eingang und dem ersten Ausgang spiralförmig ausbildet.

Die vorstehend beschriebene Ausführungsform mit dem spiralförmig ausgebildeten ersten Verlaufspfad kann eine Homogenisierung der Gasphase in der Flüssigphase erreichen, beispielsweise über den gesamten Boden. Beispielsweise empfängt die Leitwehranordnung die über den Bodenzulauf einströmende Flüssigphase und leitet diese entlang des spiralförmigen ersten Verlaufspfads hin zum Bodenablauf, über den die Flüssigphase den Boden verlässt und zu einem darunterliegenden Boden geführt wird oder aus der Stoffaustauschkolonne abgeführt wird. Der Boden kann beispielsweise eine kreisförmige Fläche aufweisen, die durch eine Außenwand begrenzt ist. Die spiralförmige Leitwehranordnung erstreckt sich beispielsweise wie die Außenwand in etwa senkrecht zum Boden, z.B. in Lotrichtung, und kann so, beispielsweise auch in Gemeinsamkeit mit der Außenwand, einen Fluidkanal entlang dem spiralförmigen ersten Verlaufspfad für die Flüssigphase ausbilden.

Nachfolgend werden weitere beispielhafte und optionale Merkmale weiterer Ausführungsformen des Bodens vorgestellt werden. Diese Merkmale können zur Ausbildung noch weiterer Ausführungsformen miteinander kombiniert werden, sofern sie nicht ausdrücklich als alternativ zueinander bezeichnet werden. Dabei wird anstelle des Begriffs "Flüssigphase" auch der Begriff "Flüssigkeit" verwendet, wobei beide Begriffe dieselbe Bedeutung haben. Analoges gilt für die Begriffe "Gasphase" und "Gas".

Insbesondere sei darauf hingewiesen, dass die beiden einleitend beschriebenen Ausführungsformen miteinander kombiniert werden können. Bei einer Ausführungsform des Bodens wird also das Gegenstromprinzip verwirklicht und es ist gleichzeitig ein spiralförmig ausgebildeter erster Verlaufspfad vorgesehen.

Bei einer das Gegenstromprinzip realisierenden Ausführungsform umfasst der Bodenzulauf also beispielsweise einen ersten Eingang, der an einem Rand des Bodens angeordnet sein kann. Weiter kann vorgesehen sein, dass der Bodenablauf einen ersten Ausgang umfasst, der in einem Zentrum des Bodens angeordnet sein kann, und dass die ersten Führungsmittel eine spiralförmige Leitwehranordnung umfassen, die den ersten Verlaufspfad spiralförmig ausbildet. Beispielsweise empfängt die Leitwehranordnung die über den Bodenzulauf einströmende Flüssigphase und leitet diese entlang des spiralförmigen ersten Verlaufspfads hin zum Bodenablauf, über den die Flüssigphase den Boden verlässt und zu einem darunterliegenden Boden geführt wird oder aus der Stoffaustauschkolonne abgeführt wird. Der Boden kann beispielsweise eine kreisförmige Fläche aufweisen, die durch eine Außenwand begrenzt ist. Die spiralförmige Leitwehranordnung erstreckt sich beispielsweise wie die Außenwand in etwa senkrecht zum Boden, z.B. in Lotrichtung, und kann so, beispielsweise auch in Gemeinsamkeit mit der Außenwand, einen Fluidkanal entlang dem spiralförmigen ersten Verlaufspfad für die Flüssigphase ausbilden.

Außerdem ist vorgesehen, dass der Bodenzulauf weiter einen zweiten Eingang umfasst, der im Zentrum des Bodens angeordnet sein kann; und dass der Bodenablauf weiter einen zweiten Ausgang umfasst, der am Rand des Bodens angeordnet sein kann; und dass die spiralförmige Leitwehranordnung den ersten Verlaufspfad mit einem spiralförmigen ersten Strömungspfad zwischen dem ersten Eingang und dem ersten Ausgang und einem zum ersten Strömungspfad gegenläufigen spiralförmigen zweiten Strömungspfad zwischen dem zweiten Eingang und dem zweiten Ausgang ausbildet. Der erste Strömungspfad führt die Flüssigphase vom ersten Eingang zum ersten Ausgang, und der zweite Strömungspfad führt die Flüssigphase vom zweiten Eingang zum zweiten Ausgang. Nach dieser Weiterbildung umfasst der Bodenzulauf beispielsweise wenigstens zwei Eingänge, von denen einer am Bodenzentrum angeordnet ist, und der andere am Bodenrand. Weiter umfasst der Bodenablauf bei dieser Weiterbildung beispielsweise wenigstens zwei Ausgänge, von denen einer am Bodenzentrum angeordnet ist, und der andere am Bodenrand. Ist der Boden kreisförmig ausgebildet, kann weiter vorgesehen sein, dass der erste am Bodenrand angeordnete Eingang des Bodenzulaufes um 180° versetzt zum zweiten am Bodenrand angeordneten Ausgang positioniert ist. Die spiralförmige Leitwehranordnung kann ausgebildet sein, den ersten Strömungspfad vom Bodenrand spiralartig hin zum Bodenzentrum zu führen, und den zweiten Strömungspfad spiralartig vom Bodenzentrum hin zum Bodenrand zu führen.

Weiter kann die spiralförmige Leitwehranordnung als Trennwehr ausgebildet sein, die den ersten Strömungspfad vom zweiten Strömungspfad trennt. Somit können die beiden Strömungspfade durch die spiralförmige Leitwehranordnung separat geführt werden. Beispielsweise ist das Trennwehr stets höher, als der Flüssigkeitspegel in den beiden Strömungspfaden.

Der erste Strömungspfad kann vom ersten Eingang zum ersten Ausgang führen und dabei eine Drehung um wenigstens 360° in einer ersten Drehrichtung beschreiben, beispielsweise im Uhrzeigersinn. Beispielsweise vollzieht der erste Strömungspfad eine Drehung um 630°, also etwa 1 ¾ Drehungen, im Uhrzeigersinn.

Demgegenüber kann der zweite Strömungspfad vom zweiten Eingang zum zweiten Ausgang führen und dabei eine Drehung um wenigstens 360° in einer zur ersten Drehrichtung entgegengesetzten Drehrichtung beschreiben. Beispielsweise vollzieht der zweite Strömungspfad eine Drehung um 630°, also etwa 1 ¾ Drehungen, gegen den Uhrzeigersinn.

Es versteht sich jedoch, dass die Gesamtgradanzahl, beispielsweise die Anzahl der Spiralen, variabel sein kann. Bei anderen Ausführungsformen ist beispielsweise nur eine Spirale vorgesehen (Drehung um 360°), oder zwei Spiralen (Drehungen um 720°) oder drei Spiralen (Drehung um 1080°) oder eine spiralförmige Anordnung, die eine Drehung um eine Gesamtgradanzahl erlaubt, die zwischen 360° und einem ganzzahligen Vielfachen von 360° liegt. Dies kann sowohl für den ersten Strömungspfad als auch für den zweiten Strömungspfad gelten.

Der erste Strömungspfad und der zweite Strömungspfad können gleich lang sein. Dies kann beispielsweise durch eine entsprechende Positionierung der Eingänge des Bodenzulaufes und der Ausgänge des Bodenablaufes sowie durch die entsprechende Ausbildung der Leitwehranordnung sichergestellt werden.

Bei einer weiteren Ausführungsform bilden auch die zweiten Führungsmittel den zweiten Verlaufspfad spiralförmig aus. So kann auch das Temperierfluid spiralartig entlang des Bodens geführt werden. Dabei ist es zweckmäßig, dass sowohl der Einlass für das Temperierfluid als auch der Auslass für das Temperierfluid am Rand des Bodens vorgesehen sind. Beispielsweise ist der Einlass für das Temperierfluid in der Nähe des zweiten Ausgangs des Bodenablaufes positioniert, und der Auslass für das Temperierfluid in der Nähe des ersten Eingangs des Bodenzulaufes.

Weiter sollen die zweiten Führungsmittel zum Führen des Temperierfluids eine im Zentrum des Bodens angeordnete Umlenkeinrichtung umfassen, wobei die zweiten Führungsmittel den zweiten Verlaufspfad mit einem spiralförmigen ersten Teilpfad und einem zum ersten Teilpfad gegenläufigen spiralförmigen zweiten Teilpfad ausbilden. Dies kann beispielsweise derart erfolgen, dass der erste Teilpfad vom Einlass zur Umlenkeinrichtung führt und eine Drehung um wenigstens 360° beschreibt, und der zweite Teilpfad von der Umlenkeinrichtung zum Auslass führt und eine entgegengesetzte Drehung um wenigstens 360° beschreibt. Dabei kann der zweite Teilpfad vollständig mit dem ersten Strömungspfad überlappen, und der erste Teilpfad kann vollständig mit dem zweiten Strömungspfad überlappen.

Einige Ausführungsformen sehen also sowohl eine spiralförmige Anordnung der ersten Führungsmittel, bspw. der Kanäle , für die Flüssigphase auf dem Boden vor, als auch eine spiralförmige Anordnung der zweiten Führungsmittel für das Temperierfluid, wobei aufgrund dieser beiden spiralförmigen Anordnungen ein Gegenstromprinzip verwirklicht werden kann, wonach das Temperierfluid entgegengesetzt zur Strömungsrichtung der Flüssigphase auf dem Boden fließt, was einen verbesserten Energieaustausch gewährleisten kann.

Weiter kann die spiralförmige Leitwehranordnung derart ausgestaltet sein, dass sie die Trennung der beiden Strömungspfade der Flüssigphase bewirkt, beispielsweise derart, dass die Flüssigphase an einer Trennwand der Leitwehranordnung gegenläufig strömt. Dies erlaubt eine Homogenisierung des Prozesses, beispielsweise eine über die gesamte Fläche des Bodens homogenisierte Absorption des Gases in der Flüssigkeit.

Das Temperierfluid kann ein Gas, Dampf oder eine Flüssigkeit sein. Beispielsweise ist eine Fluidantriebsvorrichtung vorgesehen, wie eine Pumpe, die das Gas bzw. den Dampf, bzw. die Flüssigkeit entlang dem zweiten Verlaufspfad entgegen der Strömungsrichtung der Fluidphase strömen lässt.

Die zweiten Führungsmittel können Rohrleitungen, beispielsweise in Gestalt sogenannter Rohrschlangen, umfassen, wobei ein Biegeradius der Rohrleitungen entlang des gesamten zweiten Verlaufs größer sein kann als ein vorgegebener Minimalwert. Der Minimalwert kann so gewählt sein, dass materialspezifische Grenzen nicht überschritten werden. Insbesondere kann die spiralförmige Anordnung der Rohrleitungen einen vergleichsweise großen Biegeradius erlauben.

Bei einer Ausführungsform wird der Minimalwert des Biegeradius größer gewählt, als ein materialspezifischer, kritischer, minimaler Biegungsradius. Dieser vergleichsweise große Biegeradius kann sich, wie gesagt, aufgrund der spiralförmigen Verlaufsführung ergeben. Demgegenüber sind zur Realisierung eines mäanderförmigen Verlaufs, wie er beispielsweise aus der eingangs genannten Druckschrift WO 2013/072353 A1 bekannt ist, kleine Biegeradien notwendig, um die 180° Wendungen auf engem Raum umzusetzen. Der große Biegeradius stellt deutlich geringere Anforderungen an die mechanische Beschaffenheit des Materials der Rohrleitungen, womit das Material der Rohrleitungen hinsichtlich anderer Eigenschaften, beispielsweise hinsichtlich der Korrosionsbeständigkeit, optimiert werden kann, nicht aber mit Blick auf möglichst geringe Biegeradius ausgewählt werden muss.

Die Rohrleitungen zur Führung des Temperierfluids können sich, wie oben schon angedeutet, entlang des gesamten oder wenigstens nahezu entlang des gesamten ersten Verlaufspfads erstrecken, beispielsweise derart, dass die Flüssigphase in direkten Kontakt mit den Außenwänden der Rohrleitungen tritt. Mit anderen Worten können sich die Rohrleitungen parallel zum Strömungsweg der Flüssigphase erstrecken. Dabei können mehrere Rohrleitungen nebeneinander angeordnet werden, beispielsweise bis zu zehn Rohrleitungen oder auch mehr, und die Rohrleitungen können auch in mehreren Lagen vorgesehen sein, beispielsweise in zwei, drei oder mehreren übereinanderliegenden Lagen.

Der Boden kann z.B. als Siebboden, Ventilboden, Glockenboden oder Tunnelboden ausgestaltet sein. Der Kontakt zwischen der Flüssigphase und der Gasphase kann beispielsweise durch eine Vielzahl von Stoffaustauschelementen sichergestellt werden, wobei die Stoffaustauschelemente in dem Boden vorgesehene Gasdurchtrittsöffnungen (z.B. Sieblöcher), feststehende Ventile, bewegliche Ventile, Glocken oder Tunnel aufweisen können.

Vorgeschlagen wird hier auch eine Stoffaustauschkolonne, umfassend eine Vielzahl von übereinander angeordneten Böden, die jeweils entsprechend einer der vorstehend beschriebenen Ausführungsformen ausgestaltet sind. Die Stoffaustauschkolonne kann eine Absorptionskolonne, eine Rektifikationskolonne, eine Strippkolonne oder eine Destillationskolonne sein.

Beispielsweise handelt es sich bei der Stoffaustauschkolonne um eine Absorptionskolonne zur Herstellung von Salpetersäure.

Weitere Merkmale und Vorteile werden dem Fachmann in Anbetracht des Studiums der nachfolgenden detaillierten Beschreibung sowie des Sichtens der begleitenden Zeichnungen deutlich.

### KURZE BESCHREIBUNG DER ZEICHNUNGEN

Die in den Figuren gezeigten Teile sind nicht notwendigerweise maßstabsgetreu; vielmehr liegt die Betonung in dem Darstellen von Prinzipien der Erfindung. Ferner bezeichnen in den Figuren gleich Bezugszeichen einander entsprechende Teile.

In den Figuren zeigen:
- Fig. 1: schematisch und exemplarisch eine horizontale Querschnittsansicht eines Abschnitts eines Bodens für eine Stoffaustauschkolonne gemäß einer oder mehreren Ausführungsformen;
- Fig. 2: schematisch und exemplarisch eine vertikale Querschnittsansicht eines Abschnitts eines Bodens für eine Stoffaustauschkolonne gemäß einer oder mehreren Ausführungsformen; und
- Fig. 3 und 4: jeweils schematisch und exemplarisch eine vertikale Querschnittsansicht eines Abschnitts einer Stoffaustauschkolonne gemäß einer oder mehreren Ausführungsformen.

### DETAILLIERTE BESCHREIBUNG

In der folgenden detaillierten Beschreibung wird auf die begleitenden Zeichnungen Bezug genommen, die dazugehören und in denen durch die Veranschaulichung spezifischer Ausführungsformen gezeigt wird, wie die Erfindung in die Praxis umgesetzt werden kann.

In diesem Zusammenhang kann richtungsangebende Terminologie, wie beispielsweise "oben", "unten", "außen", "innen" etc., mit Bezug auf die Ausrichtung der Figuren, die beschrieben werden, verwendet werden. Da Teile von Ausführungsformen in einer Reihe von unterschiedlichen Ausrichtungen positioniert sein können, kann die richtungsangebende Terminologie zu Zwecken der Veranschaulichung verwendet werden und ist keinesfalls einschränkend. Es wird darauf hingewiesen, dass andere Ausführungsformen angewandt werden können und strukturelle oder logische Veränderungen ausgeführt werden können, ohne vom Schutzumfang der vorliegenden Erfindung abzuweichen. Die folgende detaillierte Beschreibung ist daher nicht in einem einschränkenden Sinn zu verstehen, und der Schutzumfang der vorliegenden Erfindung ist durch die angefügten Ansprüche definiert.

Bezug wird nunmehr im Detail auf verschiedene Ausführungsformen und auf ein oder mehrere Beispiele, die in den Figuren veranschaulicht sind, genommen. Jedes Beispiel wird in erläuternder Art und Weise präsentiert und ist nicht als eine Einschränkung der Erfindung zu deuten. Beispielsweise können veranschaulichte oder als Teil einer Ausführungsform beschriebene Merkmale auf oder im Zusammenhang mit anderen Ausführungsformen angewandt werden, um noch eine weitere Ausführungsform hervorzubringen. Dass die vorliegende Erfindung derartige Modifizierungen und Variationen umfasst, ist beabsichtigt. Die Beispiele werden unter Anwendung einer spezifischen Sprache beschrieben, die nicht als den Schutzumfang der angefügten Ansprüche einschränkend ausgelegt werden sollte. Die Zeichnungen sind keine maßstabgetreue Wiedergabe und dienen lediglich der Veranschaulichung. Zum besseren Verständnis sind, wenn nicht anders angegeben, dieselben Elemente durch dieselben Bezugsziffern in den verschiedenen Zeichnungen gekennzeichnet worden.

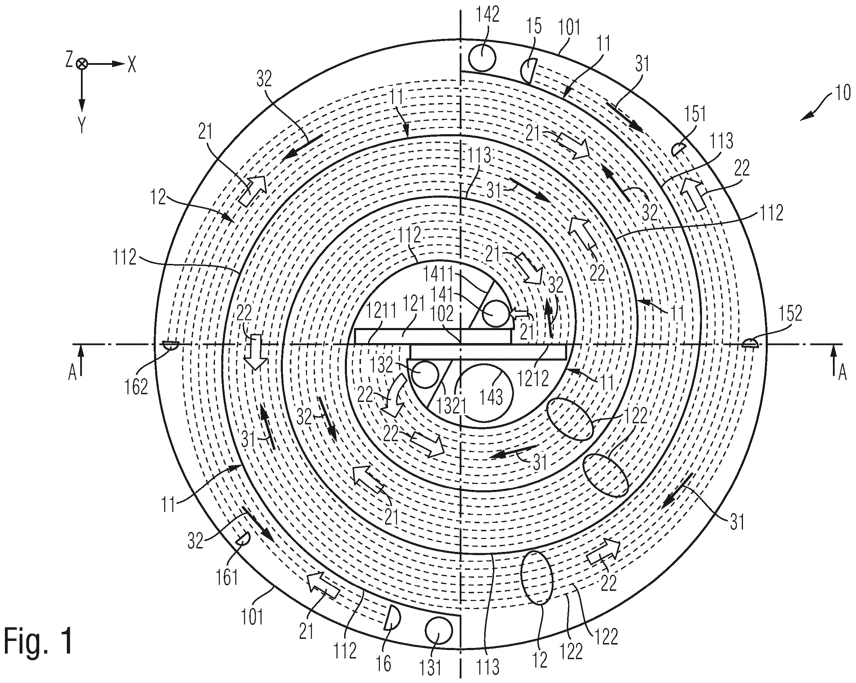

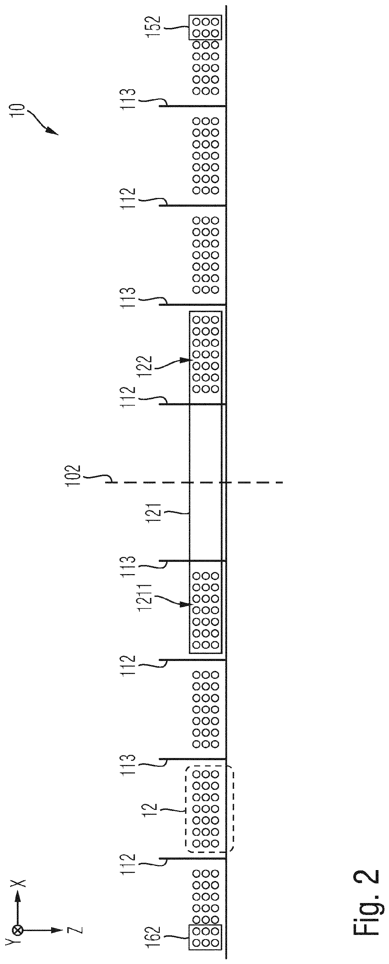

Fig. 1 zeigt schematisch und exemplarisch eine horizontale Querschnittsansicht in der XY-Ebene eines Abschnitts eines Bodens 10 für eine Stoffaustauschkolonne gemäß einer oder mehreren Ausführungsformen, und die Fig. 2 zeigt hierzu schematisch und exemplarisch eine vertikale Querschnittsansicht in der XZ-Ebene an der Schnittlinie A. Auf beide Figuren wird nachstehend Bezug genommen.

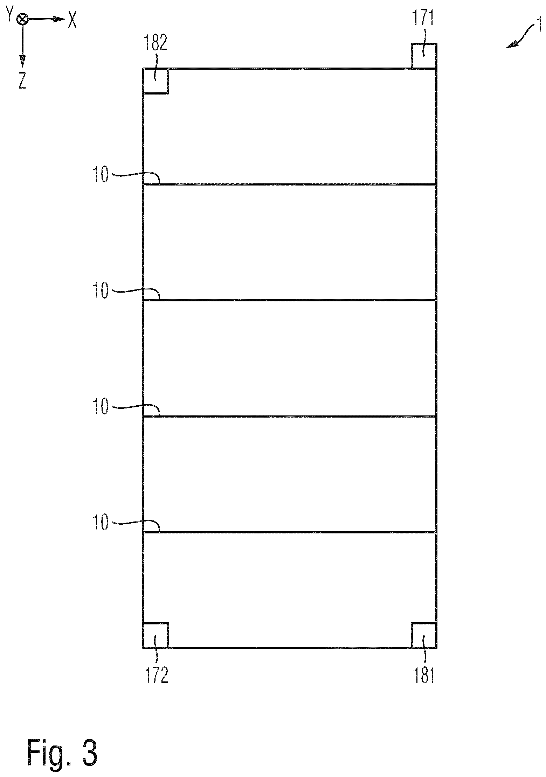

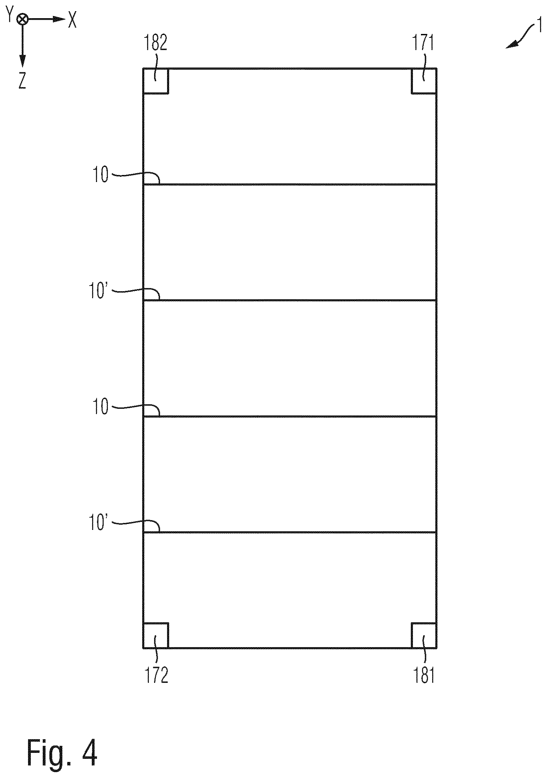

Der Boden 10 für eine Stoffaustauschkolonne (s. Bezugsziffer in den Fig. 3 und Fig. 4) umfasst einen Bodenzulauf 131, 132, über den der Boden 10 mit einer Flüssigphase beschickt wird, und einen Bodenablauf 141, 142, über den die Flüssigphase von dem Boden 10 abläuft. Der Boden 10 kann kreisförmig ausgestaltet sein, und außerdem durch einen Bodenrand 101 begrenzt sein sowie ein Bodenzentrum 102 aufweisen.

Der Bodenzulauf umfasst am Bodenrand 101 angeordneten ersten Eingang 131 sowie einen im Bodenzentrum 102 angeordneten zweiten Eingang 132. Über diese beiden Eingänge kann der Boden 10 beispielsweise die Flüssigphase von einem darüber liegenden Boden empfangen oder von einem Haupteingang für die Flüssigphase der Stoffaustauschkolonne.

Korrespondierend dazu kann der Bodenablauf einen im Bodenzentrum 102 vorgesehenen ersten Ausgang 141 sowie einen am Bodenrand 101 vorgesehenen zweiten Ausgang 142 aufweisen. Über diese beiden Ausgänge 141 und 142 fließt die Flüssigkeit vom Boden 10 ab, beispielsweise hin zu einem darunterliegenden Boden der Stoffaustauschkolonne oder zu einem Hauptausgang der Stoffaustauschkolonne. Außerdem kann im Bodenzentrum 102 ein Mannloch ("manhole") 143 vorgesehen sein, das beispielsweise von einem Inspekteur für die Zwecke einer Begehung des Bodens 10 bzw. der Stoffaustauschkolonne genutzt werden kann.

Der Boden 10 kann ausgebildet sein, um einen Kontakt zwischen der Flüssigphase und der Gasphase zu ermöglichen.

Weiter sind erste Führungsmittel 11 zum Führen der Flüssigphase vorgesehen, wobei die ersten Führungsmittel 11 einen ersten Verlaufspfad 21, 22 ausbilden, entlang dem die Flüssigphase vom Bodenzulauf 131, 132 zum Bodenablauf 141, 142 strömt. Während der Strömung entlang dem ersten Verlaufspfad 21, 22 kann ein Kontakt zwischen der Flüssigphase und der Gasphase stattfinden. Der Kontakt zwischen der Flüssigphase der Gasphase kann beispielsweise durch Stoffaustauschelemente sichergestellt werden, wie beispielsweise Gasdurchtrittsöffnungen (nicht dargestellt), die im Boden 10 verteilt angeordnet sein können.

Wie in der Fig. 1 schematisch und exemplarisch veranschaulicht ist, umfassen die ersten Führungsmittel eine spiralförmige Leitwehranordnung 11, die den ersten Verlaufspfad 21, 22 spiralförmig ausbildet, nämlich mit einem spiralförmigen ersten Strömungspfad 21 und einem zum ersten Strömungspfad 21 gegenläufigen spiralförmigen zweiten Strömungspfad 22.

Dabei kann die spiralförmige Leitwehranordnung 11 als Trennwehr ausgebildet sein, die den ersten Strömungspfad 21 vom zweiten Strömungspfad 22 trennt. Beispielsweise erstreckt sich die als Trennwehr ausgebildete spiralförmige Leitwehranordnung 11 senkrecht zum Boden 10 stets höher als der Flüssigkeitspegel in den beiden Strömungspfaden 21 und 22. Der erste Strömungspfad 21 führt vom ersten Eingang 131 zum ersten Ausgang 141, also vom Bodenrand 101 hin zum Bodenzentrum 102, und beschreibt dabei eine Drehung um wenigstens 360° in einer ersten Drehrichtung, beispielsweise eine Drehung um etwa 630° im Uhrzeigersinn. Analog dazu führt der zweite Strömungspfad 22 vom zweiten Eingang 132 zum zweiten Ausgang 142, also vom Bodenzentrum 102 hin zum Bodenrand 101, und beschreibt dabei eine Drehung um wenigstens 360° in einer zur ersten Drehrichtung entgegengesetzten Drehrichtung, Beispielsweise eine Drehung um etwa 630° gegen den Uhrzeigersinn.

Beispielsweise umfasst die spiralförmige Leitwehranordnung 11 ein erstes spiralförmiges Trennwehr 112, das vom ersten Eingang 131 spiralförmig zum Bodenzentrum 102 führt, sowie ein spiralförmiges und versetzt zum ersten Trennwehr 112 angeordnetes zweites Trennwehr 113, das vom zweiten Ausgang 142 zum Bodenzentrum 102 führt. Sowohl an dem ersten Trennwehr 112 als auch einem zweiten Trennwehr 113 strömt die Flüssigphase gegenläufig. Dies erlaubt eine Homogenisierung des Prozesses, beispielsweise eine über die Fläche homogenisierte Absorption der Flüssigkeit.

Im Bodenzentrum 102 können ferner ein Ablaufwehr 1411 sowie ein Zulaufwehr 1321 vorgesehen sein, um bestimmte Flüssigkeitspegel im ersten Strömungspfad 21 bzw. zweiten Strömungspfad 22 sicherzustellen. Ebenso kann am Bodenrand 101 in der Nähe des ersten Eingangs 131 ein (hier nicht dargestelltes) weiteres Zulaufwehr installiert sein, sowie in der Nähe des zweiten Ausgangs 142 ein (hier nicht dargestelltes) weiteres Ablaufwehr.

Für die Umsetzung dieser spiralförmigen Führung der Flüssigphase kann es zweckmäßig sein, wie in der Fig. 1 veranschaulicht ist, dass der erste Eingang 131 des Bodenzulaufes sowie der zweite Ausgang 142 des Bodenablaufes am Bodenrand 101 und dort um etwa 180° versetzt zueinander angeordnet sind.

Der erste Strömungspfad 21 und der zweite Strömungspfad 22 können gleich lang sein, was ein homogenes Prozessieren, beispielsweise eine homogene Absorption des Gases in der Flüssigphase erlaubt.

Die ersten Führungsmittel 11 zum Führen der Flüssigphase können außerdem eine Außenwand umfassen, die beispielsweise eine Zylinderform hat und sich am Bodenrand 101 senkrecht zum Boden 10 erstreckt. Die Außenwand kann die beiden äußersten Abschnitte der Strömungspfade 21 und 22 gemeinsam mit der Leitwehranordnung 11 teilweise ausbilden und in radialer Richtung begrenzen, wie dies in der Fig. 1 veranschaulicht ist.

Anders als die schematische Darstellung gemäß der Fig. 1 andeuten mag, müssen die Trennwehre 112 und 113 nicht notwendigerweise am ersten Eingang 131 bzw. am zweiten Ausgang 142 abschließen, sondern können ihren jeweiligen spiralförmigen Verlauf auch fortsetzen, bis sie etwa am Bodenrand 101 angelangen. Dadurch würde dann in radialer Richtung zwischen dem (nicht dargestellten) Abschnitt des ersten Trennwehrs 112, der vom ersten Eingang 131 zum Bodenrand 101 führt, und dem Bodenrand 101 ein Totraum entstehen, in dem keine Flüssigphase fließt. Gleiches gilt sinngemäß für das zweite Trennwehr 113; dort würde in radialer Richtung zwischen dem (nicht dargestellten) Abschnitt des zweiten Trennwehrs 113, der vom zweiten Ausgang 142 zum Bodenrand 101 führt, und dem Bodenrand 101 ein weiterer Totraum entstehen, in dem keine Flüssigphase fließt. Diese beide Toträume wären in der Fig. 1 dort zu verorten, wo keine Rohrleitungen 122 gezeigt sind. Bei ein anderen Ausführungsform verhält es sich so, wie in der Fig. 1 angedeutet ist, wonach die Trennwehre 112 und 113 am ersten Eingang 131 bzw. am zweiten Ausgang 142 abschließen und die Außenwand des Bodens 10 die äußersten Abschnitte der beiden Strömungspfade 21 und 22 in radialer Richtung begrenzen.

Um Wärme zu- oder abzuführen, kann entlang dem ersten Verlaufspfad 21, 22 ein Temperierfluid geführt werden, beispielsweise innerhalb von einem oder mehreren Rohrleitungen, das mit der Flüssigphase einen Wärmeaustausch vollzieht.

Für diese Zwecke umfasst der Boden 10 einen Einlass 15, 151, 152 für das Temperierfluid sowie einen Auslass 16, 161, 162 für das Temperierfluid. Weiter sind zweite Führungsmittel 12 vorgesehen, die einen mit dem ersten Verlaufspfad 21, 22 überlappenden zweiten Verlaufspfad 31, 32 ausbilden, der vom Einlass 15, 151, 152 zum Auslass 16 , 161, 162 führt, und wobei das Temperierfluid entlang des zweiten Verlaufspfads 31, 32 in einer zur Strömungsrichtung der Flüssigphase entgegengesetzten Richtung strömt, wie dies durch die richtungsangebende Pfeile in der Fig. 1 dargestellt ist.

Das Temperierfluid kann ein Gas, Dampf, oder eine Flüssigkeit sein. Beispielsweise ist eine (nicht dargestellte) Fluidantriebsvorrichtung vorgesehen, wie eine Pumpe, die das Gas bzw. den Dampf, bzw. die Flüssigkeit entlang dem zweiten Verlaufspfad entgegen der Strömungsrichtung der Fluidphase strömen lässt.

Die zweiten Führungsmittel 12 können Rohrleitungen 122 umfassen, durch die das Temperierfluid geführt wird, was weiter unten näher ausgeführt werden wird.

Es ist vorgesehen, dass auch die zweiten Führungsmittel 12 den zweiten Verlaufspfad 31, 32 spiralförmig ausbilden, nämlich entsprechend dem ersten Verlaufspfad 21, 22. Hierzu ist es zweckmäßig, dass sowohl der Einlass 15, 151, 152 für das Temperierfluid als auch der Auslass 16, 161, 162 für das Temperierfluid am Rand 101 des Bodens 10 angeordnet sind. Die zweiten Führungsmittel umfassen zweckmäßigerweise weiter eine im Zentrum 102 des Bodens 10 angeordnete Umlenkeinrichtung 121. So können die die zweiten Führungsmittel 12 den zweiten Verlaufspfad mit einem spiralförmigen ersten Teilpfad 31 und einem zum ersten Teilpfad 31 gegenläufigen spiralförmigen zweiten Teilpfad 32 ausbilden. Zum Beispiel führt der erste Teilpfad 31 vom Einlass 15, 151, 152 zur Umlenkeinrichtung 121 und beschreibt eine Drehung um wenigstens 360°, und der zweite Teilpfad 32 führt von der Umlenkeinrichtung 121 zum Auslass 16, 161, 162 und beschreibt eine entgegengesetzte Drehung um wenigstens 360°. Korrespondierend zum ersten Verlaufspfad 21 für die Flüssigphase kann der zweite Teilpfad 32 für das Temperierfluid eine Drehung um etwa 630° entgegen dem Uhrzeigersinn beschreiben, und korrespondierend zum zweiten Verlaufspfad 22 für die Flüssigphase kann der erste Teilpfad 31 für das Temperierfluid eine Drehung um etwa 630° im Uhrzeigersinn beschreiben.

Ein Biegeradius der Rohrleitungen 122 entlang des gesamten zweiten Verlaufs 31, 32 ist z.B. stets größer als ein vorgegebener Minimalwert. Bei einer Ausführungsform wird der Minimalwert des Biegeradius größer gewählt, als ein materialspezifischer, kritischer, minimaler Biegungsradius. Dieser vergleichsweise große Biegeradius kann sich, wie oben schon erläutert worden ist, aufgrund der spiralförmigen Verlaufsführung ergeben. Demgegenüber sind zur Realisierung eines mäanderförmigen Verlaufs, wie er beispielsweise aus der eingangs genannten Druckschrift WO 2013/072353 A1 bekannt ist, kleine Biegeradien notwendig, um die 180° Wendungen auf engem Raum umzusetzen. Der große Biegeradius stellt deutlich geringere Anforderungen an die mechanische Beschaffenheit des Materials der Rohrleitungen 122, womit das Material der Rohrleitungen 122 hinsichtlich anderer Eigenschaften, beispielsweise hinsichtlich der Korrosionsbeständigkeit, optimiert werden kann, nicht aber mit Blick auf möglichst geringe Biegeradius ausgewählt werden muss.

Im Bodenzentrum 102 kann ein Übergang zwischen dem ersten Teilpfad 31 und dem zweiten Teilpfad 32 mittels der Umlenkeinrichtung 121 erfolgen. Hierfür weist die Umlenkeinrichtung 121 beispielsweise eine Eintrittsschnittstelle 1211 auf, in der die Rohrleitungen 122, die den ersten Teilpfad 31 ausbilden, münden, sowie eine Austrittsschnittstelle 1212, aus der die Rohrleitungen 122, die den zweiten Teilpfad 32 ausbilden, austreten.

Der zweite Teilpfad 32 kann vollständig oder wenigstens nahezu vollständig mit dem ersten Strömungspfad 21 überlappen und der erste Teilpfad 31 kann vollständig oder wenigstens nahezu vollständig mit dem zweiten Strömungspfad 22 überlappen.

Beispielsweise "sieht" also die entlang der Pfade 21 und 22 strömende Flüssigphase während ihres gesamten Weges vom Bodenzulauf 131 bzw. 132 hin zum Bodenablauf 141 bzw. 142 ein ihr entgegen strömendes Temperierfluid. Auf diese Weise kann ein verbesserter Energieaustausch (also Wärmeaustausch) zwischen der Flüssigphase und den Temperierfluid stattfinden.

Der Wärmeaustausch kann entweder durch Wärmeabgabe der Flüssigphase an das Temperierfluid oder durch Wärmeabgabe des Temperierfluids an die Flüssigphase stattfinden. Im ersten Fall findet also eine Kühlung der Flüssigphase statt, und im zweiten Fall eine Erwärmung der Flüssigphase. Welcher Fall zur Anwendung kommt, hängt von der verfahrenstechnischen Notwendigkeit ab.

Die Rohrleitungen 122 zur Führung des Temperierfluids können sich, wie oben schon angedeutet, entlang des gesamten oder wenigstens nahezu entlang des gesamten ersten Verlaufspfads 21, 22 erstrecken, beispielsweise derart, dass die Flüssigphase in direkten Kontakt mit den Außenwänden der Rohrleitungen 122 tritt. Mit anderen Worten können sich die Rohrleitungen parallel zum Strömungsweg der Flüssigphase erstrecken. Dabei können mehrere Rohrleitungen 122 nebeneinander angeordnet werden, beispielsweise sieben Rohrleitungen 122, und die Rohrleitungen 122 können auch in mehreren Lagen vorgesehen sein, beispielsweise in drei übereinanderliegenden Lagen, wie dies in der Fig. 2 dargestellt ist.

Da die Breite der beiden Strömungspfade 21 und 22 in den jeweiligen äußersten Abschnitten aufgrund der kreisförmigen Außenwand am Bodenrand101 einerseits und der spiralförmigen Leitwehranordnung 11 andererseits verjüngt sein kann, kann es zweckmäßig sein, den Einlass für das Temperierfluid als auch den Auslass für das Temperierfluid verteilt am Bodenrand 101 vorzusehen. Beispielsweise ist ein Haupteinlass 15 in der Nähe des zweiten Ausgangs 142 des Bodenablaufs vorgesehen, aus der drei innere Rohrleitungen 122 austreten können, sowie zwei Nebeneinlässe 151 und 152 um 45° bzw. 90° versetzt dazu, aus denen jeweils zwei weitere äußere Rohrleitungen 122 austreten können. Entsprechend verhält es sich dann am Ende des zweiten Teilpfades 32, wo zunächst um 45° zueinander versetzte zwei Nebenauslässe 161 und 162 vorgesehen sein können, in die jeweils zwei äußere Rohrleitungen 122 münden können, sowie, wiederum um 45° versetzt, in der Nähe des ersten Eingangs 131 des Bodenzulaufes ein Hauptauslass 16, in den die vier übrigen inneren Rohrleitungen 122 münden. Je nachdem, wie viele Lagen von Rohrleitungen 122 vorgesehen sind, wären die vorstehenden Angaben hinsichtlich der Anzahl der Rohrleitungen, die aus den Einlässen 15, 151, 152 austreten bzw. in den Auslässen 16, 161, 162 münden entsprechend zu multiplizieren. Bei dem Beispiel entsprechend der Fig. 2, wo drei Lagen vorgesehen sind, treten also beispielsweise neun innere Rohrleitungen 122 aus dem Haupteinlass 15 sowie jeweils sechs äußere Rohrleitungen aus den Nebeneinlässen 151 und 152 aus, und entsprechende Anzahlen von Rohrleitungen 122 münden in den Auslässen 16, 161, 162.

Bei einer Ausführungsform können die Einlässe 15, 151 und 152 über eine oder mehrere Sammelleitungen (nicht dargestellt) verbunden sein, und gleiches gilt für die Auslässe 16, 161 und 162. Mit Blick auf die Fig. 2 kann beispielsweise vorgesehen sein, dass bei Einlass 152 2x3 Rohrleitungen 122 ausgegeben werden. Eine Sammelleitung führt dann von Einlass 152 zu Einlass 151, wo weitere 2x3 Rohrleitungen 122 austreten. Von dort führt wieder eine Sammelleitung zum Haupteinlass 15, und dort werden die ersten 3x3 Rohrleitungen 122 ausgegeben.

Fig. 3 und 4 zeigen jeweils schematisch und exemplarisch eine vertikale Querschnittsansicht eines Abschnitts einer Stoffaustauschkolonne 1 gemäß einer oder mehreren Ausführungsformen.

Die Stoffaustauschkolonne 1 umfasst eine Vielzahl von übereinander angeordneten Böden 10 bzw. 10', die jeweils entsprechend einer der vorstehend beschriebenen Ausführungsformen ausgestaltet sein können. Die Stoffaustauschkolonne 1 kann eine Absorptionskolonne, eine Rektifikationskolonne, eine Strippkolonne oder eine Destillationskolonne sein.

Beispielsweise handelt es sich bei der Stoffaustauschkolonne 1 um eine Absorptionskolonne zur Herstellung von Salpetersäure.

Die Flüssigphase wird der Stoffaustauschkolonne 1 beispielsweise über einen Haupteingang 171 zugeführt und über einen Hauptausgang 172 abgeführt. Die Gasphase kann der Stoffaustauschkolonne 1 über einen zentralen Gaseingang 181 zugeführt und über einen zentralen Gasausgang 182 abgeführt werden. Die Flüssigphase wird in der Stoffaustauschkolonne 1 also in Lotrichtung Z geführt, und die Gasphase entgegen der Lotrichtung Z, wie eingangs schon ausgeführt worden ist. Um den Kontakt zwischen der Flüssigphase und der Gasphase sicherzustellen, kann jeder der Böden 10 bzw. 10' besagte Stoffaustauschelemente, beispielsweise Gasdurchtrittsöffnungen, umfassen.

Wie gesagt sind in der Stoffaustauschkolonne 1 die Böden 10 bzw. 10' übereinander angeordnet. Prinzip bedingt ergibt sich also, dass der Bodenablauf (s. Bezugsziffern 131 und 132 in Fig. 1) des jeweiligen oberen Bodens 10 bzw. 10' mit dem Bodenzulauf (s. Bezugsziffern 141 und 142 in Fig. 1) des darunterliegenden Bodens 10 bzw. 10' zu verbinden sind. Diese Aufgabe kann beispielsweise über den oder die oben schon erwähnten (hier nicht dargestellten) Downcomer erfolgen, was dem Fachmann grundsätzlich bekannt ist.

Nach der in der Fig. 4 gezeigten Variante sind die Böden 10 und 10' jeweils um 180° zueinander gedreht worden, sodass das Design der Downcomer zwischen den jeweiligen Böden im Wesentlichen identisch ausgeführt werden kann.

Bei der in der Fig. 3 gezeigten Variante sind alle Böden 10 im Wesentlichen gleichartig ausgebildet, was jedoch erfordern kann, dass sich die Ausgestaltung der Downcomer zwischen den jeweiligen Böden 10 alternierend ändert.

Bei einer noch weiteren Variante kann vorgesehen sein, dass nur jeder zweite Boden 10 der Stoffaustauschkolonne 1 das oben beschriebene Gegenstromprinzip verwirklicht. So kann vermieden werden, dass sich die Downcomer alternierend ändern müssen.

Wie hier verwendet, sind die Begriffe "umfassend", "aufweisend", "einschließend", und ähnliches offene Begriffe, welche das Vorhandensein von angeführten Elementen oder Merkmalen anzeigen, zusätzliche Elemente oder Merkmale jedoch nicht ausschließen. In Anbetracht des obigen Bereichs von Variationen und Anwendungen wird darauf hingewiesen, dass die vorliegende Erfindung nicht durch die vorangegangene Beschreibung eingeschränkt wird, und auch nicht durch die begleitenden Zeichnungen eingeschränkt wird. Die vorliegende Erfindung ist vielmehr lediglich durch die folgenden Ansprüche eingeschränkt.

## Patentansprüche

1. Boden (10) für eine Stoffaustauschkolonne (1), wobei der Boden (10) ausgebildet ist, um einen Kontakt zwischen einer Flüssigphase und einer Gasphase zu ermöglichen, und wobei der Boden (10) umfasst:
- einen Bodenzulauf (131, 132), über den der Boden (10) mit der Flüssigphase beschickt wird;
- einen Bodenablauf (141, 142), über den die Flüssigphase von dem Boden (10) abläuft;
- erste Führungsmittel (11) zum Führen der Flüssigphase, wobei die ersten Führungsmittel (11) einen ersten Verlaufspfad (21, 22) ausbilden, entlang dem die Flüssigphase vom Bodenzulauf (131, 132) zum Bodenablauf (141, 142) strömt,
- einen Einlass (15, 151, 152) für ein Temperierfluid;
- einen Auslass (16, 161, 162) für das Temperierfluid; und
- zweite Führungsmittel (12) zum Führen des Temperierfluids für einen Wärmeaustausch mit der Flüssigphase, wobei die zweiten Führungsmittel (12) einen mit dem ersten Verlaufspfad überlappenden zweiten Verlaufspfad (31, 32) ausbilden, der vom Einlass (15, 151, 152) zum Auslass (16, 161, 162) führt, und wobei das Temperierfluid entlang des zweiten Verlaufspfads (31, 32) in einer zur Strömungsrichtung der Flüssigphase entgegengesetzten Richtung strömt, wobei
- der Bodenzulauf einen ersten Eingang (131) umfasst;
- der Bodenablauf einen ersten Ausgang (141) umfasst; und
- die ersten Führungsmittel eine spiralförmige Leitwehranordnung (11) umfassen, die den ersten Verlaufspfad (21) zwischen dem ersten Eingang (131) und dem ersten Ausgang (141) spiralförmig ausbildet, wobei
- der Bodenzulauf weiter einen zweiten Eingang (132) umfasst;
- der Bodenablauf weiter einen zweiten Ausgang (142) umfasst; und
- die spiralförmige Leitwehranordnung (11) den ersten Verlaufspfad (21, 22) mit einem spiralförmigen ersten Strömungspfad (21) zwischen dem ersten Eingang (131) und dem ersten Ausgang (141) und einem zum ersten Strömungspfad (21) gegenläufigen spiralförmigen zweiten Strömungspfad (22) zwischen dem zweiten Eingang (132) und dem zweiten Ausgang (142) ausbildet,
- wobei der erste Eingang (131) am Bodenrand (101) angeordnet ist,
- wobei der erste Ausgang (141) im Bodenzentrum (102) angeordnet ist,
- wobei sich der Einlass (15) für das Temperierfluid am Bodenrand (101) befindet,
- wobei sich der Auslass (16) für das Temperierfluid ebenfalls am Bodenrand (101) befindet,
- wobei die zweiten Führungsmittel (12) eine im Zentrum (102) des Bodens (10) angeordnete Umlenkeinrichtung (121) umfassen
- und wobei in dem ersten Verlaufspfad, in dem die Flüssigphase vom ersten Eingang (131) zum ersten Ausgang (141) strömt, das Temperierfluid über den zweiten Teilpfad (32) spiralförmig von der Umlenkeinrichtung (121) zum Auslass (16) fließt.

2. Boden (10) nach Anspruch 1, wobei die spiralförmige Leitwehranordnung (11) als Trennwehr ausgebildet ist, die den ersten Strömungspfad (21) vom zweiten Strömungspfad (22) trennt.

3. Boden (10) nach Anspruch 1 oder 2, wobei der erste Strömungspfad (21) vom ersten Eingang (131) zum ersten Ausgang (141) führt und eine Drehung um wenigstens 360° in einer ersten Drehrichtung beschreibt.

4. Boden (10) nach Anspruch 3, wobei der zweite Strömungspfad (22) vom zweiten Eingang (132) zum zweiten Ausgang (142) führt und eine Drehung um wenigstens 360° in einer zur ersten Drehrichtung entgegengesetzten Drehrichtung beschreibt.

5. Boden (10) nach einem der vorstehenden Ansprüche 1 bis 4, wobei der erste Strömungspfad (21) und der zweite Strömungspfad (22) gleich lang sind.

6. Boden (10) nach Anspruch 1, wobei die zweiten Führungsmittel (12) den zweiten Verlaufspfad (31, 32) spiralförmig ausbilden.

7. Boden (10) nach Anspruch 6, wobei die zweiten Führungsmittel (12) den zweiten Verlaufspfad (31, 32) mit einem spiralförmigen ersten Teilpfad (31) und einem zum ersten Teilpfad (31) gegenläufigen spiralförmigen zweiten Teilpfad (32) ausbildet.

8. Boden (10) nach Anspruch 7, wobei der erste Teilpfad (31) vom Einlass (15, 151, 152) zur Umlenkeinrichtung (121) führt und eine Drehung um wenigstens 360° beschreibt, und wobei der zweite Teilpfad (32) von der Umlenkeinrichtung (121) zum Auslass (16, 161, 162) führt und eine entgegengesetzte Drehung um wenigstens 360° beschreibt.

9. Boden (10) nach Anspruch 4 und nach Anspruch 8, wobei der zweite Teilpfad (32) vollständig mit dem ersten Strömungspfad (21) überlappt und der erste Teilpfad (31) vollständig mit dem zweiten Strömungspfad (22) überlappt.

10. Stoffaustauschkolonne (1), umfassend eine Vielzahl von übereinander angeordneten Böden (10), die jeweils nach einem der vorstehenden Ansprüche ausgestaltet sind.

## Claims

1. A tray (10) for a mass-transfer column (1), where the tray (10) is configured to allow contact between a liquid phase and a gas phase and the tray (10) comprises:
- a tray inlet (131, 132) via which the tray (10) is supplied with the liquid phase;
- a tray outlet (141, 142) via which the liquid phase runs out from the tray (10);
- first guide means (11) for guiding the liquid phase, where the first guide means (11) form a first flow path (21, 22) along which the liquid phase flows from the tray inlet (131, 132) to the tray outlet (141, 142),
- an inlet (15, 151, 152) for a temperature-control fluid;
- an outlet (16, 161, 162) for the temperature-control fluid; and
- second guide means (12) for guiding the temperature-control fluid for heat exchange with the liquid phase, where the second guide means (12) form a second flow path (31, 32) which overlaps with the first flow path and leads from the inlet (15, 151, 152) to the outlet (16, 161, 162) and the temperature-control fluid flows along the second flow path (31, 32) in a direction opposite to the flow direction of the liquid phase, where
- the tray inlet comprises a first entrance (131);
- the tray outlet comprises a first exit (141); and
the first guide means comprise a spiral guide weir arrangement (11) which in a spiral fashion forms the first flow path (21) between the first entrance (131) and the first exit (141), wherein
- the tray inlet further comprises a second entrance (132);
- the tray outlet further comprises a second exit (142); and
- the spiral guide weir arrangement (11) forms the first flow path (21, 22) with a spiral first transport path (21) between the first entrance (131) and the first exit (141) and a spiral second transport path (22), running counter to the first transport path (21), between the second entrance (132) and the second exit (142),
- wherein the first entrance (131) is arranged at the periphery (101) of the tray (10),
- wherein the first exit (141) is arranged in the center (102) of the tray (10),
- wherein the inlet (15) for the for the temperature-control fluid is provided at the periphery (101) of the tray (10),
- wherein the outlet (16) for the for the temperature-control fluid is also provided at the periphery (101) of the tray (10),
- wherein the second guide means (12) comprise a deflection device (121) arranged in the center (102) of the tray (10),
- and wherein in the first flow path, in which the liquid phase flows from the first entrance (131) to the first exit (141), the temperature-control fluid flows in a spiral fashion from the deflection device (121) to the outlet (16).

2. The tray (10) as claimed in claim 1, wherein the spiral guide weir arrangement (11) is configured as a separation weir which separates the first transport path (21) from the second transport path (22).

3. The tray (10) as claimed in claim 1 or 2, wherein the first transport path (21) leads from the first entrance (131) to the first exit (141) and performs a rotation by at least 360° in a first direction of rotation.

4. The tray (10) as claimed in claim 3, wherein the second transport path (22) leads from the second entrance (132) to the second exit (142) and performs a rotation by at least 360° in a direction of rotation opposite to the first direction of rotation.

5. The tray (10) as claimed in any of preceding claims 1 to 4, wherein the first transport path (21) and the second transport path (22) have equal lengths.

6. The tray (10) as claimed in claim 1, wherein the second guide means (12) form, in a spiral fashion, the second flow path (31, 32).

7. The tray (10) as claimed in claim 6 wherein the second guide means (12) form the second flow path (31, 32) with a spiral first subpath (31) and a second spiral subpath (32) which runs counter to the first subpath (31).

8. The tray (10) as claimed in claim 7, wherein the first subpath (31) leads from the inlet (15, 151, 152) to the deflection device (121) and performs a rotation by at least 360° and the second subpath (32) leads from the deflection device (121) to the outlet (16, 161, 162) and performs a rotation by at least 360° in the opposite direction.

9. The tray (10) as claimed in claim 4 and as claimed in claim 8, wherein the second subpath (32) completely overlaps with the first transport path (21) and the first subpath (31) completely overlaps with the second transport path (22).

10. A mass-transfer column (1) comprising a plurality of superposed trays (10) which are each configured as claimed in any of the preceding claims.

## Revendications

1. Plateau (10) pour une colonne d'échange de matière (1), le plateau (10) étant réalisé pour permettre un contact entre une phase liquide et une phase gazeuse, et le plateau (10) comprenant :
- une arrivée de plateau (131, 132) par laquelle le plateau (10) est alimenté en phase liquide ;
- un drain de plateau (141, 142) par lequel la phase liquide s'écoule du plateau (10) ;
- des premiers moyens de guidage (11) pour guider la phase liquide, les premiers moyens de guidage (11) réalisant un premier chemin d'écoulement (21, 22) le long duquel la phase liquide circule de l'arrivée de plateau (131, 132) au drain de plateau (141, 142) ;
- une admission (15, 151, 152) pour un fluide d'équilibrage de température ;
- une évacuation (16, 161, 162) pour le fluide d'équilibrage de température ; et
- des deuxièmes moyens de guidage (12) pour guider le fluide d'équilibrage de température en vue d'un échange thermique avec la phase liquide, les deuxièmes moyens de guidage (12) réalisant un deuxième chemin d'écoulement (31, 32) chevauchant le premier chemin d'écoulement et qui mène de l'admission (15, 151, 152) à l'évacuation (16, 161, 162), et dans lequel le fluide d'équilibrage de température circule le long du deuxième chemin d'écoulement (31, 32) dans une direction opposée à la direction de circulation de la phase liquide, dans lequel
- l'arrivée de plateau comprend une première entrée (131) ;
- le drain de plateau comprend une première sortie (141) ; et
- les premiers moyens de guidage comprennent un agencement de barrage de guidage en spirale (11) qui réalise en spirale le premier chemin d'écoulement (21) entre la première entrée (131) et la première sortie (141), dans lequel
- l'arrivée de plateau comprend en outre une deuxième entrée (132) ;
- le drain de plateau comprend en outre une deuxième sortie (142) ; et
- l'agencement de barrage de guidage en spirale (11) réalise le premier chemin d'écoulement (21, 22) avec un premier chemin d'écoulement en spirale (21) entre la première entrée (131) et la première sortie (141) et un deuxième chemin d'écoulement en spirale (22) en sens contraire du premier chemin d'écoulement (21) entre la deuxième entrée (132) et la deuxième sortie (142),
- la première sortie (131) étant disposée sur le bord de plateau (101),
- la première sortie (141) étant disposée au centre de plateau (102),
- l'entrée (15) pour le fluide d'équilibrage de température se trouvant au bord de plateau (101),
- la sortie (16) pour le fluide d'équilibrage de température se trouvant également au bord de plateau (101),
- dans lequel les deuxièmes moyens de guidage (12) comprennent un dispositif de renvoi (121) disposé au centre (102) du plateau (10),
- et dans lequel, sur le premier chemin d'écoulement, sur lequel la phase liquide circule de la première entrée (131) à la première sortie (141), le fluide d'équilibrage de température circule par le deuxième chemin partiel (32) en spirale du dispositif de renvoi (121) à l'évacuation (16).

2. Plateau (10) selon la revendication 1, dans lequel l'agencement de barrage de guidage en spirale (11) est réalisé sous la forme d'un barrage de séparation qui sépare le premier chemin d'écoulement (21) du deuxième chemin d'écoulement (22).

3. Plateau (10) selon la revendication 1 ou 2, dans lequel le premier chemin d'écoulement (21) mène de la première entrée (131) à la première sortie (141) et décrit une rotation d'au moins 360° dans un premier sens de rotation.

4. Plateau (10) selon la revendication 3, dans lequel le deuxième chemin d'écoulement (22) mène de la deuxième entrée (132) à la deuxième sortie (142) et décrit une rotation d'au moins 360° dans un sens de rotation opposé au premier sens de rotation.

5. Plateau (10) selon l'une quelconque des revendications précédentes 1 à 4, dans lequel le premier chemin d'écoulement (21) et le deuxième chemin d'écoulement (22) ont la même longueur.

6. Plateau (10) selon la revendication 1, dans lequel les deuxièmes moyens de guidage (12) réalisent le deuxième chemin d'écoulement (31, 32) en spirale.

7. Plateau (10) selon la revendication 6, dans lequel les deuxièmes moyens de guidage (12) réalisent le deuxième chemin d'écoulement (31, 32) avec un premier chemin partiel en spirale (31) et un deuxième chemin partiel en spirale (32) en sens contraire au premier chemin partiel (31).

8. Plateau (10) selon la revendication 7, dans lequel le premier chemin partiel (31) mène de l'admission (15, 151, 152) au dispositif de renvoi (121) et décrit une rotation d'au moins 360°, et dans lequel le deuxième chemin partiel (32) mène du dispositif de renvoi (121) à l'évacuation (16, 161, 162) et décrit une rotation opposée d'au moins 360°.

9. Plateau (10) selon la revendication 4 ou 8, dans lequel le deuxième chemin partiel (32) chevauche complètement le premier chemin d'écoulement (21) et le premier chemin partiel (31) chevauche complètement le deuxième chemin d'écoulement (22).

10. Colonne d'échange de matière (1), comprenant une pluralité de plateaux superposés (10) qui sont configurés selon l'une quelconque des revendications précédentes, respectivement.
